(19) Europäisches Patentamt / European Patent Office / Office européen des brevets

(11) **EP 2 933 229 A1**

(12) **EUROPEAN PATENT APPLICATION**


(43) Date of publication:
**21.10.2015 Bulletin 2015/43**

(51) Int Cl.:
***C01B 31/04*** *(2006.01)* ***H01G 11/36*** *(2013.01)*
***H01G 11/62*** *(2013.01)* ***H01G 11/86*** *(2013.01)*

(21) Application number: **14165215.6**

(22) Date of filing: **17.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**



(71) Applicants:
- **BASF SE**
  **67056 Ludwigshafen (DE)**
- **Max-Planck-Gesellschaft zur Förderung der Wissenschaften e.V.**
  **80539 München (DE)**

(72) Inventors:
- **Venkataraman, Shyam**
  **67061 Ludwigshafen (DE)**
- **Kurkina, Tetiana**
  **67433 Neustadt an der Weinstrasse (DE)**
- **Nathan-Walleser, Teressa**
  **67227 Frankenthal (DE)**
- **Schwab, Matthias**
  **68199 Mannheim (DE)**
- **Muellen, Klaus**
  **50939 Koeln (DE)**

(74) Representative: **Haggenmüller, Christian**
**Maiwald Patentanwalts GmbH**
**Elisenhof**
**Elisenstraße 3**
**80335 München (DE)**


(54) **Electrochemical capacitor devices using two-dimensional carbon material for high frequency AC line filtering**


(57) The present invention relates to the use of an electrochemical capacitor, which comprises electrochemically exfoliated graphene, for AC line filtering.


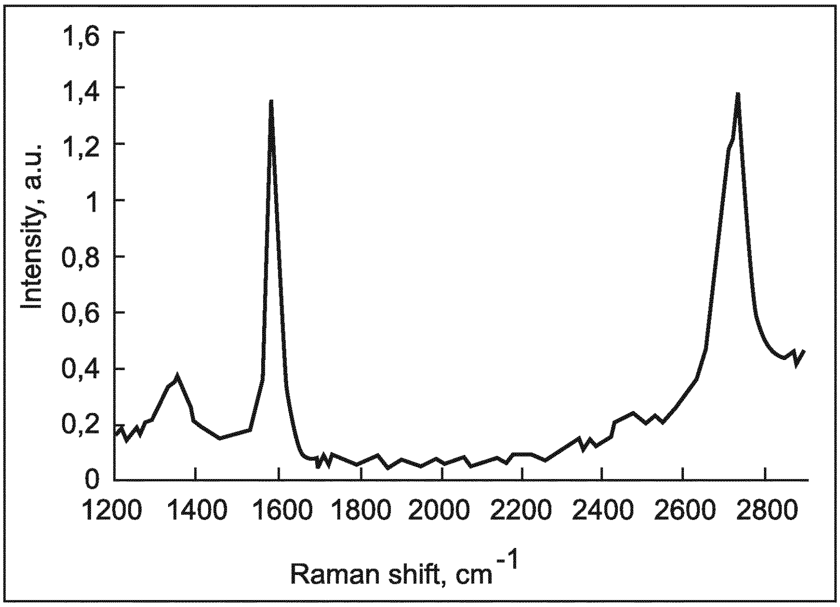


**Fig. 2**


EP 2 933 229 A1

## Description

The present invention relates to the use of electrochemical capacitors for AC line filtering.

Electrolytic capacitors are used in large quantities in electric circuits where high currents or low frequencies are involved. One of the most common applications of electrolytic capacitor is in power supply circuits as decoupling capacitors where they are used to suppress high-frequency noise in power supply signals. They are very cost effective and able to provide a larger capacitance per volume than other types of conventional electrostatic capacitors. However, they have limited frequency response as their equivalent series resistance (ESR) increases with frequency, thus restricting their use in frequencies below 100 kHz. Electrolytic capacitors also encounter major hurdles when it comes to applications that require small scale device design. Miniaturization of electrolytic capacitors is challenging as there are many parameters to be considered such as the geometric area of electrodes, dielectric property of the oxide layer, and electrolyte etc. Hence, new solutions for efficient energy storage technologies along with continuous miniaturization are required in order to address these challenges.

Electrochemical capacitors (ECs), also known as supercapacitors, are unique energy storage devices with complementary properties to Li-ion batteries, and are often considered as promising candidates for alternative energy storage as a result of their pulse power supply, long cycle life, and low maintenance cost. Utilization of ECs in applications such as on-chip energy storage and ac-line filtering is made possible with the current advancement in electronics fabrication technology. The time constant of ECs is significantly higher than that of electrolytic capacitors because of the nature of the electrode active material. In ECs, activated carbon is dominantly used as electrode material, which is largely microporous in nature, and therefore limits the rapid signal propagation. At 120 Hz EC devices containing activated carbon electrodes function more like resistors than capacitors which makes them incompatible for ac-line filtering.

Other forms of carbon such as conductive carbon black and specific forms of graphene have been recently demonstrated as potential materials for ac-line filtering application.

Kossyrev et al., Journal of Power Sources, 2012, Volume 201, pp. 347-352, describe the preparation of a electrochemical capacitor having electrodes made of carbon black.

Miller et al., Science, Vol. 329, September 2010, pp. 1637-1639, describe the preparation of an electrochemical capacitor for AC line filtering, wherein the electrodes are made of CVD graphene. The electrochemical capacitor with CVD graphene electrodes has a RC time constant of less than 200$\mu$s at 120 Hz frequency. The superior performance is attributed to the direct growth of graphene with special geometry and edge conformation on the metal current collectors by high temperature chemical-vapor deposition (CVD) method. However, the CVD fabrication technique might not be cost effective for large scale production.

Kaixuan Sheng et al, Sci. Rep. 2012; 2: 247, describe the preparation of a electrochemical capacitor for AC line filtering, wherein a dispersion of graphene oxide was prepared and then subjected to an electrochemical reduction in the presence of metal electrodes, thereby obtaining a graphene film on the metal working electrode. By this method, a RC time constant of 1.35 ms at 120 Hz was achieved, and a scan rate ability of up to 350 $Vs^{-1}$ was reported. However, in particular for AC line filtering, it would be of interest to further reduce the RC time constant. A further improvement in other performance characteristics such as charging/discharging capability would also be desirable.

It is an object of the present invention to provide an electrochemical capacitor which is suitable for AC line filtering (in particular at high frequency such as 100 Hz or 120 Hz or even higher) and can be manufactured by an economically efficient method. Preferably, an improvement in RC time constant should not be achieved at the expense of other capacitor performance characteristics such as charging/discharging capability, power density and/or energy density.

The problem is solved by using an electrochemical capacitor which comprises electrochemically exfoliated graphene for AC line filtering.

In the present invention, it has been realized that electrochemical capacitors (which are also known as "supercapacitors") comprising electrochemically exfoliated graphene show a surprisingly low RC time constant and are therefore suitable for AC line filtering. Furthermore, for other relevant capacitor performance characteristics such as charging/discharging capability, power density and/or energy density, a very high level can be achieved. As discussed below in further detail, subjecting an appropriate carbon starting material such as graphite to an electrochemical exfoliation treatment, thereby producing electrochemically exfoliated graphene, is principally known. Electrochemical exfoliation represents an economically efficient method for preparing graphene. However, this type of graphene (i.e. electrochemically exfoliated graphene) is not only obtainable by an economically efficient and easy-to-perform method but also enables the preparation of electrochemical capacitors having surprisingly low RC time constants.

Preferably, the electrochemical capacitor comprising the electrochemically exfoliated graphene is used for AC line filtering at high frequency, e.g. 100 Hz or 120 Hz or even higher.

As will be discussed below in further detail, at least one electrode of the electrochemical capacitor to be used for AC line filtering is preferably made of electrochemically exfoliated graphene. Optionally, two or more electrodes can be made of the electrochemically exfoliated graphene.

Preparation of graphene by electrochemical exfoliation is principally known to the skilled person. Reference can be made e.g. to Adv Funct Mater 18, 1518-1525 (2008) and US 2013/0001089.

Electrochemical exfoliation for preparing the electrochemically exfoliated graphene typically comprises the following steps:

- providing a first electrode E1 and a second electrode E2, wherein at least the first electrode E1 comprises a carbon starting material having a layered structure;
- bringing at least the first electrode E1 in contact with a liquid electrolyte,
- applying an electric potential between the first electrode E1 and the second electrode E2 so as to exfoliate graphene from the carbon starting material.

In the present application, the term "graphene" is not limited to a single layer graphene but also encompasses a few-layer graphene having e.g. up to twenty graphene layers.

The first electrode E1 preferably comprises a carbon starting material having a layered structure. Appropriate carbon materials from which graphene can be exfoliated are commonly known to the skilled person.

The carbon starting material having a layered structure can be e.g. a graphite, a chemically modified graphite such as a graphite oxide, an intercalated graphite, or a mixture thereof.

The graphite can be a natural graphite or a synthetic graphite. Exemplary graphite materials include a highly oriented pyrolytic graphite (HOPG), an expanded graphite, an intercalated graphite, or any combination thereof. For avoiding a subsequent reduction treatment, it can be preferred that the first electrode E1 does not contain a graphite oxide. The same is true for the second electrode E2.

The carbon starting material, preferably graphite, can be provided in any form which is consistent with its use as an electrode material, e.g. in the form of flakes, a powder, fibers, foils, rods, a paste, or any combination thereof. An exemplary graphite foil can be made of e.g. thermally expanded graphite pressed into thin sheets. As generally known, thermally expanded graphite can be produced from natural graphite flakes via intercalation.

The electrode E1 can be e.g. a single graphite flake or many flakes held together. In the latter case, the flakes can be placed on a conductive surface, physically pressed together or held together using a binder such as a pyrolysed polymer (e.g. an extruded graphite rod).

The electrode E2 can be made of any material commonly known as an electrode material. The electrode E2 can be made of e.g. a metal such as Pt, Au, a conductive carbon material, ... etc. In principle, it is possible that the second electrode E2 also comprises a carbon material having a layered structure such as graphite or modified graphite.

At least the first electrode E1 is preferably brought into contact with a liquid electrolyte, e.g. by immersing, either partly or completely, the electrode E1 in the liquid electrolyte.

Optionally, the second electrode E2 may also be brought into contact with the same liquid electrolyte, e.g. by immersing, either partly or completely, the electrode E2 in the liquid electrolyte. If so, both electrodes E1 and E2 are in contact with the same electrolyte.

Preferably, the liquid electrolyte comprises an acid, a salt, or a mixture thereof.

Preferably, the liquid electrolyte is an aqueous electrolyte. In principle, the aqueous electrolyte may additionally comprise a polar solvent such as an alcohol. However, it is preferred that water represents the major part among the solvents being present in the electrolyte (e.g. more than 50 vol% or more than 75 vol%, based on the total volume of the solvents being present in the electrolyte).

As discussed below in further detail, the salt being present in the liquid electrolyte can be an ionic liquid. If an ionic liquid is used, it is possible that at least 80 wt% or at least 90 wt% of the liquid electrolyte are made of the ionic liquid. The liquid electrolyte may even consist of the ionic liquid. The process is then operated at a temperature above the melting temperature of the ionic liquid. However, in a preferred embodiment, the liquid electrolyte contains one or more solvents, preferably water (i.e. an aqueous electrolyte), and the ionic liquid is dissolved or dispersed in the solvent(s).

In principle, pH of the liquid (preferably aqueous) electrolyte can vary over a broad range. The liquid electrolyte can be acidic, i.e. pH is less than 7 or less than 5 or even less than 3. Alternatively, the liquid electrolyte can be alkaline, i.e. pH is higher than 7 or higher than 8 or even higher than 9. According to a further alternative, the liquid electrolyte can have a pH of $7\pm2$ (i.e. 5 to 9) or $7\pm1$ (i.e. 6 to 8).

If an acid is present in the liquid electrolyte, it can be e.g. an inorganic sulfur-containing acid (such as sulfuric acid, sulfurous acid, thiosulfuric acid, thiosulfurous acid, dithionic acid, or polysulfuric acid), a sulfonic acid, or a sulphuric acid monoester, or any mixture thereof.

Preferably, the sulfonic acid has the formula (I) and the sulphuric acid monoester has the formula (II)

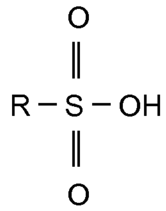

(I)

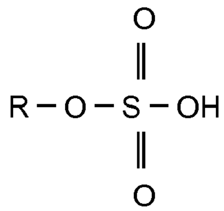

(II)

wherein in each of the formulas (I) and (II)
R is an organic residue, e.g. a substituted or unsubstituted alkyl or a substituted or unsubstituted aryl, more preferably a substituted or unsubstituted $C_{1-4}$ alkyl group, in particular methyl, ethyl, propyl, or butyl.

If a salt is present in the liquid electrolyte, it can be e.g. a salt of an inorganic sulfur-containing acid (e.g. a sulphate salt, a hydrogen sulphate salt, a thiosulphate salt, a sulphite salt, or a hydrogen sulphite salt), a salt of a sulfonic acid, or a salt of a sulphuric acid monoester.

The salt of the sulfonic acid can have the following formula (III)

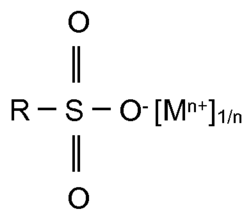

(III)

wherein
R is an organic residue, e.g. a substituted or unsubstituted alkyl group or a substituted or unsubstituted aryl group, more preferably a substituted or unsubstituted $C_{1-4}$ alkyl group, and
M is a cation, and n is the valency of the cation (typically, n is 1, 2 or 3).

The salt of the sulphuric acid monoester can have the following formula (IV)

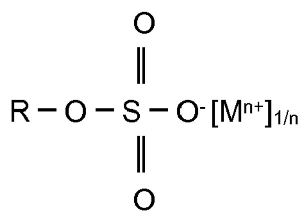

(IV)

wherein
R is an organic residue, e.g. a substituted or unsubstituted alkyl group or a substituted or unsubstituted aryl group, more preferably a substituted or unsubstituted $C_{1-4}$ alkyl group, and
M is a cation, and n is the valency of the cation (typically, n is 1, 2 or 3).

The salt (such as the salts of Formula (III) or (IV)) can be an ionic liquid. In the present invention, the term "ionic liquid" is used according to its commonly accepted meaning and therefore relates to a salt which has a low melting temperature, typically less than 100°C or even less than 60°C.

If a salt is present in the liquid electrolyte, it is, just like any salt, of course made of anions and cations. The cation M of the salt is e.g. an alkali metal cation, an alkaline earth metal cation, an ammonium cation, a transition metal cation, a heterocyclic cation, or a phosphonium cation, or a mixture thereof.

If the salt (such as the salts of Formula (III) or (IV)) is an ionic liquid, the cation M is preferably an ammonium cation, a transition metal cation, a heterocyclic cation, or a phosphonium cation, or a mixture thereof.

In the present invention, the term "ammonium cation" refers to any cation which comprises at least one tetravalent nitrogen atom (i.e. a nitrogen atom bonded to 4 atoms) carrying a positive charge. The ammonium cation can be derived from any compound comprising an amine group by e.g. protonation or alkylation of the amine nitrogen atom. Preferably, the ammonium cation is derived from ammonia or an organic amine (e.g. a primary, secondary or tertiary $C_{1-4}$ alkyl amine) by protonation or alkylation (e.g. $C_{1-4}$ alkylation) of one or more nitrogen atoms.

The ammonium cation can have the following formula (V)

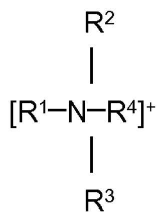

(V)

wherein each of the residues $R^1$, $R^2$, $R^3$ and $R^4$ bonded to the nitrogen atom is, independently from each other, hydrogen or $C_{1-4}$ alkyl. Preferably, each of the residues $R^1$, $R^2$, $R^3$ and $R^4$ is, independently from each other, hydrogen or $C_{1-2}$ alkyl.

It is also possible that the ammonium cation is derived from a polyamine, e.g. a diamine (such as an ethylene diamine or a propylene diamine) or a triamine, by protonation and/or alkylation.

Heteroatoms which may be present in the heterocyclic cation are e.g. nitrogen, oxygen, sulfur, or phosphor. Appropriate nitrogen-containing heterocyclic cations include e.g. an imidazolium cation, a pyridinium cation, a pyrrolidinium cation, a pyrazolium cation, a pyridazinium cation, a pyrimidinium cation, a pyrazinium cation, an oxazolium cation, a triazolium cation, a thiazolium cation, a piperidinium cation, a quinolium cation, an isoquinolium cation, a benzimidazolium cation, or any mixture thereof.

If the heterocyclic cation is an imidazolium cation, it can have the following formula:

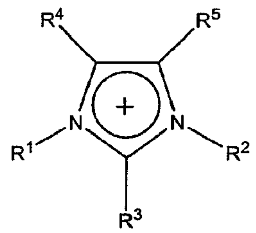

wherein the residues $R^1$ to $R^5$ are, independently from each other, selected from hydrogen, a substituted or unsubstituted $C_{1-12}$ alkyl group, a substituted or unsubstituted $C_{1-6}$ alkoxy group, or hydroxy. In case of a substituted alkyl or alkoxy group, one or more of the hydrogen atoms of the alkyl or alkoxy group can be substituted e.g. by -OH or-CN. In a preferred embodiment, $R^1$ is a $C_{1-12}$ alkyl, more preferably a $C_{1-6}$ alkyl, $R^2$ is a $C_{1-4}$ alkyl, more preferably a $C_{1-2}$ alkyl, $R^3$ is hydrogen or a $C_{1-2}$ alkyl, $R^4$ is hydrogen, and $R^5$ is hydrogen.

The concentration of the acid or the salt in the liquid electrolyte can vary over a broad range.

If an acid or a salt, which is not an ionic liquid, is present in the liquid electrolyte, its concentration can be e.g. within the range of from 0.005 wt% to 30 wt%, more preferably 0.05 wt% to 20 wt%, or from 0.1 wt% to 10 wt% or from 0.5 wt% to 7 wt%.

If the liquid electrolyte comprises a salt which is an ionic liquid, the salt can be present in a concentration of from 0.1 wt% to 80 wt%, more preferably from 1.0 wt% to 50 wt%, even more preferably from 1.5 wt% to 35 wt% or from 1.5 wt% to 25 wt%.

Alternatively, if an ionic liquid is used, the liquid electrolyte may even consist of the sulfonate or monoester sulphate salt.

These concentration values may refer to the concentration at the beginning of the electrochemical exfoliation process and may change during the process. It is also possible that the concentration is within the ranges indicated above until completion of the electrochemical exfoliation process, if necessary by adding further acid or salt during the process.

The liquid (preferably aqueous) electrolyte can be obtained by at least partly dissolving the acid or the salt in a solvent, preferably in water. The liquid (preferably aqueous) electrolyte can also be obtained by adding to a solvent, preferably water, the acid which provides upon deprotonation the anion and a basic compound which provides upon

protonation the cation. The acid and the basic compound can be added simultaneously or one after the other (e.g. the basic compound first and then the acid, or *vice versa*).

The liquid electrolyte may contain one or more additives such as a surfactant, a dispersant, an oxidant, a buffering agent, or any mixture thereof. Alternatively, it is possible that the liquid electrolyte does not contain one or more of these additives, e.g. does not contain a surfactant and/or a dispersant.

For further improving dispersion stability of the graphene in the liquid electrolyte, an aryl sulfonic acid condensation product, more preferably a naphthalene sulfonic acid condensation product can be present in the liquid electrolyte. If present, it is preferably a condensation product of an aryl sulfonic acid, in particular a naphthalene sulfonic acid, or a salt thereof with an aldehyde, in particular formaldehyde. Such condensation products are commercially available.

If present, one or more of these additives may already be added at the beginning of the electrochemical exfoliation process or may alternatively be added at a later stage (i.e. when the electrochemical exfoliation of graphene has already started or even after completion of the electrochemical exfoliation of graphene). So, in principle, it is also possible in the process of the present invention that the liquid electrolyte does not contain a dispersant and/or a surfactant when the electrochemical exfoliation process is started, and a dispersant and/or a surfactant is/are added to the liquid electrolyte during the electrochemical exfoliation of graphene and/or after completion of the electrochemical exfoliation of graphene (e.g. for stabilizing the exfoliated graphene layers).

If present, the surfactant can be a non-ionic, an anionic or a cationic surfactant. Appropriate dispersants are commonly known to the skilled person.

As indicated above, an electric potential is applied between the first electrode E1 and the second electrode E2 so as to exfoliate the graphene from the carbon starting material.

Based on common general knowledge, the skilled person is able to select an electric potential which is high enough for initiating exfoliation and thereby separating graphene layers from the carbon starting material.

Whether or not exfoliation has been initiated can be verified e.g. by detecting morphological changes in the electrode E1 and/or detecting graphene which has been exfoliated from the electrode E1 into the liquid electrolyte.

The electric potential applied between the first electrode E1 and the second electrode E2 can vary over a broad range and is typically in the range of from 0.01 V to 200 V, more preferably 0.05 V to 20 V or 0.1 V to 15 V.

In principle, any power or voltage source commonly known to the skilled person can be used for applying the electric potential between the electrodes E1 and E2.

Preferably, the electric potential is high enough for at least temporarily generating a gas at the electrode E1 and/or the electrode E2. Whether or not a gas is generated at an electrode can easily be detected (e.g. formation of gas bubbles at the electrode surface).

It can be preferred to increase or adjust the electric potential to a value which is high enough for at least temporarily generating hydrogen gas and hydroxyl ions at the electrode E2.

As known to the skilled person, hydrogen gas and hydroxyl ions can be generated according to the following reaction scheme:

$$2\ H_2O + 2\ e^- \rightarrow H_2 + 2\ OH^-$$

Although being generated at the electrode E2, this may assist the intercalation of compounds into the layered carbon starting material at the electrode E1 and thereby improve efficiency of the exfoliation process.

Optionally, it can also be preferred to increase or adjust the electric potential to a value which is high enough for at least temporarily generating oxygen gas at the electrode E1. As known to the skilled person, oxygen gas can be generated according to the following reaction scheme:

$$2\ H_2O \rightarrow O_2 + 4H^+ + 4\ e^-$$

Generation of oxygen gas may improve separation of graphene layers from the layered carbon starting material which in turn improves efficiency of the exfoliation process.

During the electrochemical exfoliation, the polarity of the electric potential can be changed, either periodically or non-periodically. Alternatively, it is also possible that the polarity of the electric potential does not change during the electrochemical exfoliation.

Preferably, a positive voltage is applied to the first electrode E1 (i.e. E1 represents the anode), either temporarily or throughout the entire electrochemical exfoliation process. If the positive voltage is not applied throughout the entire electrochemical exfoliation process to the electrode E1, a positive voltage and a negative voltage can alternately be applied to the first electrode E1.

If needed, the graphene can be separated from the liquid electrolyte by methods commonly known to the skilled person, such as filtration (e.g. vacuum filtration), centrifugation, sedimentation, sieving, or any combination thereof. The graphene may then be dispersed in a liquid dispersion medium which is subsequently used in the manufacturing process.

Typically, the electrochemically exfoliated graphene is in the form of flakes. Preferably, at least 50%, more preferably at least 60% or at least 70% of the electrochemically exfoliated graphene flakes are made of at most three graphene layers (i.e. the majority of the graphene flakes are single- and bi- and tri-layer graphene flakes). The relative amount of single-layer and bi- and tri-layer graphene flakes can be measured by atomic force microscopy (AFM). The percentage value is based on the number of flakes. So, among 100 graphene flakes, at least 50 flakes are typically single-, bi- and tri-layer graphene flakes.

Preferably, at least 60%, more preferably at least 70% of the electrochemically exfoliated graphene flakes have a size of at least 5 μm. Size of a graphene flake is measured by scanning electron microscopy (SEM) and relates to the largest dimension of the flake shown on the SEM image. The percentage value is based on the number of flakes. So, among 100 graphene flakes, at least 60 flakes are typically having a size of at least 5 μm.

The electrochemically exfoliated graphene can have a carbon to oxygen atomic ratio of at least 8, more preferably at least 10, as determined by X-ray photoelectron spectroscopy; and/or can have an intensity ratio, based on peak height, of the D peak to the G peak (i.e. $I_D/I_G$) in the Raman spectrum of less than 1.0, more preferably less than 0.85 or even less than 0.75. The Raman spectrum is measured on a bulk sample (i.e. not on an individual flake) with a 514 nm excitation laser. The lower the $I_D/I_G$ ratio, the lower is the number of defects in the graphene material. So, with the process of the present invention, a graphene is obtainable which has a low number of defects and a low amount of oxidized carbon atoms.

The electrochemically exfoliated graphene which has been prepared as described above is then used for manufacturing a electrochemical capacitor for AC line filtering. For the purpose of AC line filtering, the electrochemical capacitor is incorporated into an AC line filter. Preferably, the electrochemical capacitor has at least one electrode which is made of the electrochemically exfoliated graphene. However, it is also possible that the electrochemical capacitor comprises at two electrodes which are both made of the electrochemically exfoliated graphene.

The skilled person generally knows how to prepare a electrochemical capacitor having one or more graphene electrodes.

Typically, the manufacturing of the electrochemical capacitor comprises:

- forming at least one electrode which is made of the electrochemically exfoliated graphene and is in contact with a current collector, and
- adding an electrolyte (in the following also referred to as the "capacitor electrolyte") such that the electrolyte is in contact with the at least one electrode made of the electrochemically exfoliated graphene.

The electrochemical capacitor may have a common sandwich-type structure, i.e. two electrodes opposite to each other in parallel configuration, the space in between these two parallel electrodes being at least partly filled with an electrolyte.

Alternatively, the electrochemical capacitor may comprise in-plane graphene electrodes (i.e. the graphene electrodes are located on the same substrate) of interdigital structure. The term "electrodes of interdigital structure" is used according to its commonly accepted meaning and therefore relates to a structure in which the length of the region between two electrodes is increased by an interlocking-finger design of the electrodes. Such an electrode configuration is also referred to as an "interdigitated structure".

The preparation of such in-plane graphene electrodes of interdigital structure is described e.g. by Z. Wu, K. Parvez, X. Feng, K. Müllen, Nature Communications, Volume 4, Article number 2487, published 17 September 2013.

Preferably, the electrode is binder-free.

Preferably, the graphene-containing electrode(s) is/are predominantly made of the electrochemically exfoliated graphene. For example, the electrochemically exfoliated graphene may represent at least 70 wt%, more preferably at least 85 wt% of the total weight of the electrode.

In principle, the graphene-containing electrode(s) may contain further electrically conductive carbon materials such as carbon black. However, in a preferred embodiment, the electrochemically exfoliated graphene is either the only conductive carbon material being present in the electrode(s); or the electrochemically exfoliated graphene represents at least 70wt%, more preferably at least 80 wt% or at least 90 wt% of the conductive carbon material being present in the electrode(s).

Preferably, the current collector is a metal. Appropriate metals are known to the skilled person and include e.g. Au, Ag, Cu, Al, W, Zn, Fe, Co, Ni, Pt, Sn, Pb, Pd, Ti, or any alloy or combination thereof. However, conductive non-metal materials such as carbon fabric can be used as well.

The graphene can be applied onto the substrate by film-forming methods commonly known to the skilled person. Preferably, a graphene dispersion is used. Exemplary methods include e.g. Langmuir-Blodgett technique, dip-coating, spin-coating, printing, painting (e.g. brush painting), dry transfer technique (e.g. providing the graphene on a temporary substrate (e.g. by filtration) and then transferring the graphene to the substrate of the layered assembly), self-assembly on appropriate surfaces (e.g. SAM modified), dielectrophoresis, electrodeposition (e.g. for conductive substrates or

electrodes), or any combination thereof. Alternatively, it is also possible that the graphene is provided on a substrate (e.g. by one of the film-forming methods mentioned above), followed by applying the current collector on the graphene, e.g. by thermal evaporation under vacuum.

Appropriate electrolytes which can be used for electrochemical capacitors are generally known to the skilled person. The electrolyte can be liquid or non-liquid. Common aqueous electrolytes include e.g. aqueous solutions of KOH or $H_2SO_4$. Common organic electrolytes are e.g. tetraethylammonium tetrafluoroborate dissolved in either propylene carbonate or acetonitrile. Electrolytes which are non-liquid include gel electrolytes (such as polymer gel electrolytes). Exemplary gel electrolytes are e.g. a polyvinyl alcohol/$H_2SO_4$ gel (a gel made of polyvinyl alcohol (PVA) and $H_2SO_4$), a PVA/$H_3PO_4$ gel, a PVA/KOH gel, a PVA/NaOH gel, a PVA/$Na_2SO_4$ gel, an ionic liquid polymer gel, or any mixture thereof.

Once the electrochemical capacitor having at least electrode made of electrochemically exfoliated graphene is prepared, the skilled person can easily manufacture an AC line filter which comprises said electrochemical capacitor. Typically, in an AC line filter, a capacitor is connected to one or more resistors and/or inductors.

According to a further aspect, the present invention relates to a process for manufacturing an AC line filter, which comprises

(i) preparing a graphene by electrochemical exfoliation,
(ii) manufacturing a electrochemical capacitor which has at least one electrode being made of the electrochemically exfoliated graphene of step (i),
(iii) manufacturing an AC line filter which comprises the electrochemical capacitor of step (ii).

The electrochemically exfoliated graphene in step (i) can be prepared as already described above.

In step (ii), the electrochemical capacitor can be manufactured as already described above.

As already mentioned above, the skilled person commonly knows how to incorporate a capacitor into an AC line filter.

When using electrochemically exfoliated graphene, an electrochemical capacitor can be obtained which has a very low RC time constant while other relevant capacitor performance characteristics are still on a very high level.

Thus, according to a further aspect, the present invention relates to an electrochemical capacitor which has at least one electrode being made of an electrochemically exfoliated graphene, and has an RC time constant at 120 Hz of less than 1.0 ms.

More preferably, the electrochemical capacitor has a RC time constant at 120 Hz of less than 0.80 ms.

Further below in the Examples, it is explained how the RC time constant is determined.

Preferably, the electrochemical capacitor has a power density of at least 100 $W/cm^3$, more preferably at least 250 $W/cm^3$ or even at least 400 $W/cm^3$; and/or has an energy density of at least 0.05 $mWh/cm^3$, more preferably at least 0.1 $mWh/cm^3$ or even at least 0.5 $mWh/cm^3$. Preferably, the electrochemical capacitor has an equivalent series resistance (ESR) of less than 0.7 $\Omega$, more preferably less than 0.5 $\Omega$ or even less than 0.4 $\Omega$. Further below in the Examples, it is explained how power density, energy density, and ESR are determined.

Preferably, the electrochemical capacitor has at least two electrodes which are both made of an electrochemically exfoliated graphene.

With regard to the preferred properties of the electrochemically exfoliated graphene, reference can be made to the statements made above.

According to a further aspect, the present invention relates to an AC line filter, comprising an electrochemical capacitor which has at least one electrode being made of an electrochemically exfoliated graphene.

With regard to the preferred properties of the electrochemical capacitor and the electrochemically exfoliated graphene, reference can be made to the statements already provided above. Preferably, the electrochemical capacitor has an RC time constant at 120 Hz of less than 1.0 ms. Preferably, the electrochemical capacitor has a power density of at least 100 $W/cm^3$, more preferably at least 250 $W/cm^3$ or even at least 400 $W/cm^3$; and/or has an energy density of at least 0.05 $mWh/cm^3$, more preferably at least 0.1 $mWh/cm^3$ or even at least 0.5 $mWh/cm^3$. Preferably, the electrochemical capacitor has an equivalent series resistance (ESR) of less than 1.0 $\Omega$, more preferably less than 0.6 $\Omega$.

The present invention will now be described in further detail by the following examples.

## Examples

### 1. Preparation of electrochemically exfoliated graphene

*Materials, chemicals and instrumentation.* Graphite rods and graphite foil (Alfa Aesar,), 1-ethyl-3-methylimidazolium methanesulfonate (EMIM-MS). BioLogic cycler and Gamry potentiostat were used to apply the required voltage and monitor the generated current.

Graphite was subjected to an electrochemical exfoliation treatment in a liquid electrolyte containing 1-ethyl-3-methylimidazolium methanesulfonate (EMIM-MS) which is an ionic liquid (i.e. a salt having a low melting temperature; m.p. (EMIM-MS): 35°C) and is commercially available (e.g. Basionics, BASF SE).

The aqueous electrolyte was prepared by adding the salt into water. Different salt concentrations were tested. As electrodes, either graphite rods or graphite foils were used. Graphite foils were produced by pressing thermally expanded graphite into thin sheets, and thermally expanded graphite was produced from natural graphite flakes via intercalation. The graphite electrodes were immersed in the aqueous electrolyte and a voltage was applied for starting the electrochemical exfoliation process.

1-Ethyl-3-methylimidazolium methanesulfonate (EMIM-MS) was tested at concentrations of 2 wt%, 5 wt%, 10 wt% and 20 wt% in water. The following voltages were applied for effecting exfoliation (i.e. exfoliation potential):

2 wt%: 10 V
5 wt%: 8 V
10 wt%: 6 V
20 wt%: 5 V

In all tests, anodic exfoliation was observed. After the electrochemical exfoliation process was over, the exfoliated material was separated from the electrolyte and thoroughly washed with water using vacuum filtration. The obtained powder was dispersed in N-ethyl-pyrrolidone (NEP) using bath sonication for 15 min. After that, the dispersion was centrifuged 2600 rpm for 20 min and supernatant was used for further characterization and testing.

For AFM and Raman characterization the dispersion was drop-casted on $Si/SiO_2$, for TEM measurements - on carbon grids.

Raman measurements (using 514 nm laser) made on bulk samples which had been electrochemically exfoliated from graphite rods showed typical characteristic peaks for a graphene (D-peak at around 1350 $cm^{-1}$, G-peak at 1579 $cm^{-1}$, 2D-peak at 2700 $cm^{-1}$). This is shown in Figure 6. The average value of $I_D/I_G$ (i.e. ratio of intensities of the peaks D and G) obtained from three measurement points was calculated for every sample. For graphene produced in an electrolyte containing 2% EMIM-MS, $I_D/I_G$ was 0.78. Electrolyte containing 5% EMIM-MS: $I_D/I_G$ was 0.82. Electrolyte containing 10% EMIM-MS: $I_D/I_G$ was 0.67. Electrolyte containing 20% EMIM-MS: $I_D/I_G$ was 0.76.

A Raman measurement was also made on an individual graphene flake of a sample which had been electrochemically exfoliated from a graphite foil. This is shown in Figure 7. Again, the characteristic graphene peaks can be identified in the Raman spectrum. The $I_D/I_G$ ratio was 0.25.

To perform FTIR spectroscopy, a portion of the electrochemically exfoliated graphene (EEG) dispersion was dried on PTFE membrane. After drying, a thin pellet can be peeled off from the membrane and directly used for ATR-FTIR measurements. Alternatively, EEG-paper obtained using vacuum filtration of the dispersion through PTFE membrane was used. FTIR spectra of the EEG obtained using different concentrations of ionic liquid were identical. The ATR-FTIR spectrum of EEG was compared with commercially available graphene oxide ("Graphene Supermarket", USA). FTIR spectra and corresponding chemical groups are shown on Fig. 3. In the FTIR of the EEG, peaks corresponding to oxygen containing groups are either of much lower intensity or even completely absent, if compared to graphene oxide. In particular, O-H stretching mode (3400 $cm^{-1}$), C=O vibrational mode (1730 $cm^{-1}$), C-OH vibrational 1390 $cm^{-1}$, epoxy C-O-C (1060 $cm^{-1}$) peaks are of very low intensity or even absent in EEG.

## 2. **Preparation of electrochemical capacitors suitable for AC line filtering**

For preparing a electrochemical capacitor, the graphene dispersion which had been obtained as described above by electrochemical exfoliation in the presence of 1-ethyl-3-methylimidazolium methanesulfonate (EMIM-MS) was used.

### *Electrode preparation*

Electrodes were prepared using EEG (electrochemically exfoliated graphite), which was dispersed in NEP with the concentration of 1.5 mg/ml. It is a binderless technique where the as-prepared graphene ink is drop-coated directly on current collectors (CC).

Prior to coating, the current collectors (either nickel foam or nickel foil) were punched out into a 12 mm diameter circular disks. They were cleaned in a sonication bath with isopropanol for 10 minutes, vacuum dried at 70°C for 2 hours and then weighed individually. 2 -3 $\mu$l of EEG ink was dropped onto the nickel foam disks and vacuum dried at 70°C for 12 hours. This procedure was repeated for the second coating before drying it completely in the vaccum oven for another 24 hours at 70°C before electrochemical capacitor fabrication. The weight of the active material (EEG) was determined by subtracting bare nickel foam weight, taken prior to the drop coating, from the active material coated nickel foam or foil.

*Assembly and electrochemical characterizations of electrochemical capacitors*

Symmetric two-electrode electrochemical capacitors were assembled in a stainless steel electrochemical capacitor cell with titanium electrodes using microfiber glass separator of 20mm in between two EEG coated nickel foam or foil. All electrochemical measurements were carried out using 1 M of potassium hydroxide (KOH) as the electrolyte. The electrochemical impedance spectroscopy, cyclic voltammetry, and galvanostatic charge-discharge were measured using an electrochemical workstation Biologic Potentiostat/Galvanostat MPG2 and Gamry MultiEchem Potentiostat/Galvanostat/ZRA system at room temperature.

Example 1:

Graphene was prepared by electrochemical exfoliation of a graphite rod (alternatively: a graphite foil) in a 10 wt% aqueous solution of 1-ethyl-3-methylimidazolium methanesulfonate. The electrochemically exfoliated graphene was provided on a nickel foam (acting as a current collector) and the electrochemical capacitor was assembled following the procedure outlined above.

CV curves of the electrochemical capacitor obtained at different scan rates of 100, 500, 1000 and 2000 V $s^{-1}$ are shown in Figure 4. The results indicate a typical electric double-layer capacitive behavior even at ultrahigh scan rates, demonstrating its ultrahigh power ability. An ultra-fast charging/discharging capability of 2000 V/s is achieved.

Figure 5 shows the Nyquist plot. The inset is a magnified plot of the high frequency region, showing a vertical intersection with the axis. The half semi-circle is curve fitted using a standard model and the intersection of the curve on the Z-real axis is 0.3 Ω. Accordingly, a low ESR (equivalent series resistance) value of 0.3 Ω was determined.

At 120 Hz, a very low RC constant of 714 μs was obtained.

The RC time constant is determined from the following equation:

$$\tau_{frequency} = RC = Z' \, (1/(2\pi f Z''))$$

wherein Z' is the resistive element, *Z"* is the capacitive element and *f* is the frequency corresponding to it.

Z' and Z"are determined from the Nyquist plot.

The relaxation time constant, $T_o$, which is taken at an -45° angle, where the real and the imaginary component have equal magnitude, is calculated using the formula below, where $f_o$ is the frequency at an -45° angle:

$$T_o = 1/(2\pi f_o)$$

A very low $T_o$ value of 66.3 μs (at $f_o$ of 2402 Hz) was obtained.

A Ragone plot is shown in Figure 6. As derivable from Figure 6, high power and energy density values are obtained. When using a graphite foil as a starting material for electrochemical exfoliation, a power density of up to 8720 kW/kg (corresponding to 540 w/$cm^3$) and an energy density of up to 16 Wh/kg (corresponding to 1 mWh/$cm^3$) were obtained. When using a graphite rod as a starting material for electrochemical exfoliation, a power density of up to 2952 kW/kg (corresponding to 550 w/$cm^3$) and an energy density of up to 10 Wh/kg (corresponding to 1.9 mWh/$cm^3$) were obtained.

The energy and power densities were determined using the equations below;

$$E = 0.5 \times C V^2 \qquad \text{(in } Wh\text{/kg)}$$

V: discharge voltage range (in volts)

C: discharge capacitance (in Farads)

$$P = E/t \qquad \text{(in } W\text{/kg)}$$

E: Energy density

t: discharge time (in seconds)

Example 2:

Graphene was prepared by electrochemical exfoliation of a graphite rod in a 2 wt% aqueous solution of 1-ethyl-3-methylimidazolium methanesulfonate.
The electrochemically exfoliated graphene was provided on a nickel foil (acting as a current collector) and the electrochemical capacitor was assembled following the procedure outlined above.

CV curves of the electrochemical capacitor obtained at different scan rates of 70 and 500 V $s^{-1}$ are shown in Figure 7. The results indicate a typical electric double-layer capacitive behavior even at ultrahigh scan rates, demonstrating its ultrahigh power ability. An ultra-fast charging/discharging capability of 500 V/s is achieved.

Figure 8 shows the Nyquist plot. The inset is a magnified plot of the high frequency region, showing a vertical intersection with the axis. A low ESR (equivalent series resistance) value of about 0.3 Ω was determined.

At 120 Hz, a very low RC constant of 613 μs (when using a graphite rod as a starting material for electrochemical exfoliation) and 616 μs (when using a graphite foil as a starting material for electrochemical exfoliation), respectively, was obtained. The RC constant was determined as outlined above.

The relaxation time constant, $T_o$, which is taken at an -45° angle, where the real and the imaginary component have equal magnitude, is calculated using the formula below, where $f_o$ is the frequency at an -45° angle:

$$\tau_o = 1/(2\pi f_o)$$

A very low $T_o$ value of 253 μs was obtained at 629 Hz ($f_o$ value at -45°).

Accordingly, as demonstrated by the Examples, an electrochemical capacitor having electrodes made of the electrochemically exfoliated graphene of the present invention has a surprisingly low RC time constant at 120 Hz. Other relevant capacitor properties, in particular charging/discharging capability, power and energy densities, and ESR value are also on a very high level. Due to its very low RC time constant in combination with the other beneficial properties, the electrochemical capacitor is very suitable for AC line filtering. Thus, the electrochemically exfoliated graphene of the present invention is not only obtainable by an economically efficient and easy-to-perform method but also enables the preparation of electrochemical capacitors having surprisingly low RC time constants.

## Claims

1. Use of an electrochemical capacitor, which comprises electrochemically exfoliated graphene, for AC line filtering.

2. The use according to claim 1, wherein the electrochemically exfoliated graphene is prepared by electrochemical exfoliation comprising the following steps:

   - providing a first electrode E1 and a second electrode E2, wherein at least the first electrode E1 comprises a carbon starting material having a layered structure;
   - bringing at least the first electrode E1 in contact with a liquid electrolyte,
   - applying an electric potential between the first electrode E1 and the second electrode E2 so as to exfoliate graphene from the carbon starting material.

3. The use according to claim 2, wherein the carbon starting material having a layered structure is a graphite, a chemically modified graphite, an intercalated graphite, or a mixture thereof.

4. The use according to claim 2 or 3, wherein the liquid electrolyte comprises an acid and/or a salt; and/or wherein the liquid electrolyte is an aqueous electrolyte.

5. The use according to claim 4, wherein the liquid electrolyte comprises an inorganic sulfur-containing acid, a sulfonic acid, or a sulfuric acid monoester, or a salt of one or more of said acids.

6. The use according to claim 5, wherein the sulfonic acid has the formula (I) and the sulphuric acid monoester has the formula (II)

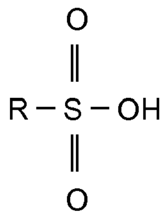

(I)

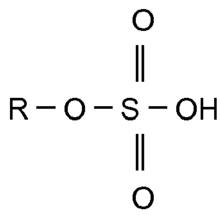

(II)

wherein in each of the formulas (I) and (II)
R is an organic residue.

**7.** The use according to one of the claims 4 to 6, wherein the salt is an ionic liquid.

**8.** The use according to one of the claims 4 to 7, wherein the cation of the salt is an alkali metal cation, an alkaline earth metal cation, an ammonium cation, a transition metal cation, a heterocyclic cation, or a phosphonium cation, or a mixture thereof.

**9.** The use according to one of the preceding claims, wherein the electrochemically exfoliated graphene is in the form of flakes, and at least 50% of the graphene flakes are made of at most three graphene layers; and/or at least 60% of the graphene flakes have a size of at least 5 $\mu$m.

**10.** The use according to one of the preceding claims, wherein the electrochemically exfoliated graphene has a carbon to oxygen atomic ratio of at least 8, as determined by X-ray photoelectron spectroscopy; and/or has an intensity ratio of the D peak to the G peak in the Raman spectrum of less than 1.0.

**11.** The use according to one of the preceding claims, wherein at least one electrode of the electrochemical capacitor is made of the electrochemically exfoliated graphene.

**12.** The use according to one of the preceding claims, wherein the electrochemical capacitor is manufactured by:

- forming at least one electrode which is made of the electrochemically exfoliated graphene and is in contact with a current collector, and
- adding an electrolyte such that the electrolyte is in contact with the at least one electrode made of the electrochemically exfoliated graphene.

**13.** A process for manufacturing an AC line filter, which comprises

(i) preparing a graphene by electrochemical exfoliation,
(ii) manufacturing a electrochemical capacitor which has at least one electrode being made of the electrochemically exfoliated graphene of step (i),
(iii) manufacturing an AC line filter which comprises the electrochemical capacitor of step (ii).

**14.** The process according to claim 13, wherein the electrochemically exfoliated graphene of step (i) is prepared according to one of the claims 2 to 8; and/or wherein the electrochemical capacitor of step (ii) is prepared according to claim 12.

**15.** An electrochemical capacitor which has at least one electrode being made of an electrochemically exfoliated graphene, and has an RC time constant at 120 Hz of less than 1.0 ms.

**16.** The electrochemical capacitor according to claim 15, which has a power density of at least 100 $W/cm^3$; and/or an energy density of at least 0.05 $mWh/cm^3$; and/or an equivalent series resistance (ESR) of less than 0.7 Ω.

**17.** An AC line filter, comprising an electrochemical capacitor which has at least one electrode being made of an electrochemically exfoliated graphene; the electrochemical capacitor preferably being an electrochemical capacitor according to claim 15 or 16.

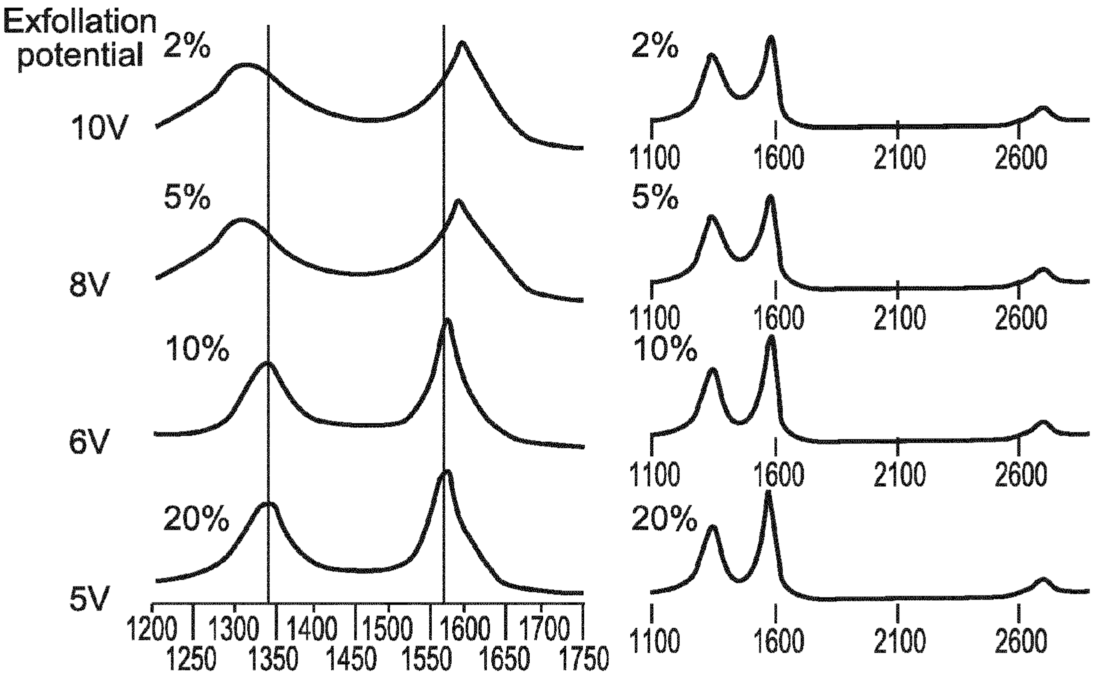
Exfollation potential
2%
10V
5%
8V
10%
6V
20%
5V
1200 1300 1400 1500 1600 1700
1250 1350 1450 1550 1650 1750
2%
1100 1600 2100 2600
5%
1100 1600 2100 2600
10%
1100 1600 2100 2600
20%
1100 1600 2100 2600

**Fig. 1**

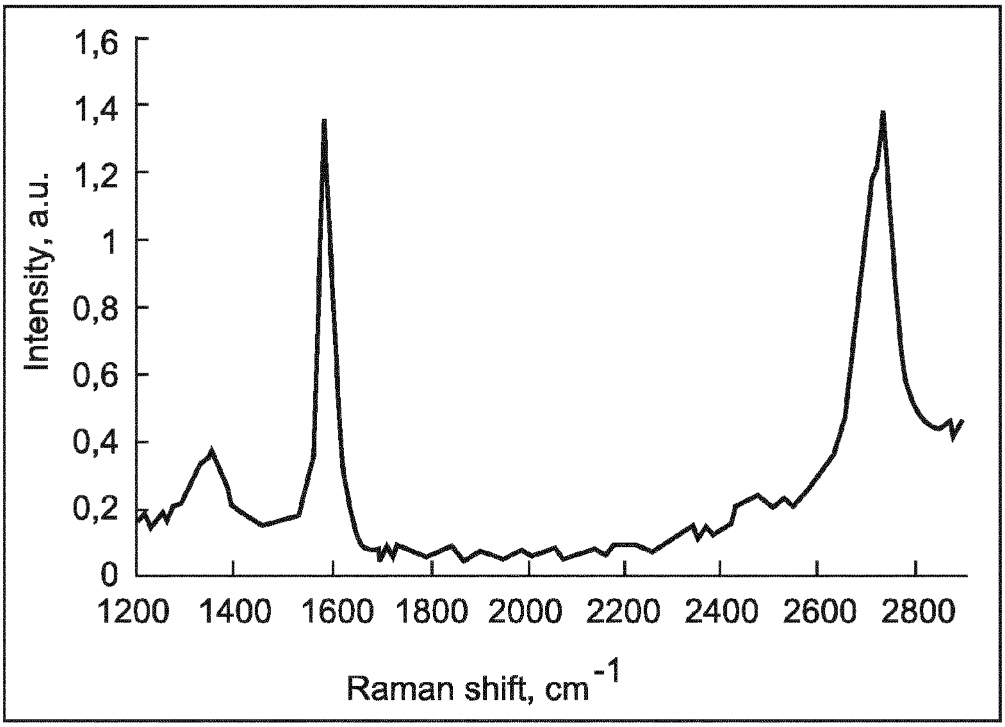
Intensity, a.u.
1,6
1,4
1,2
1
0,8
0,6
0,4
0,2
0
1200 1400 1600 1800 2000 2200 2400 2600 2800
Raman shift, cm-1

**Fig. 2**

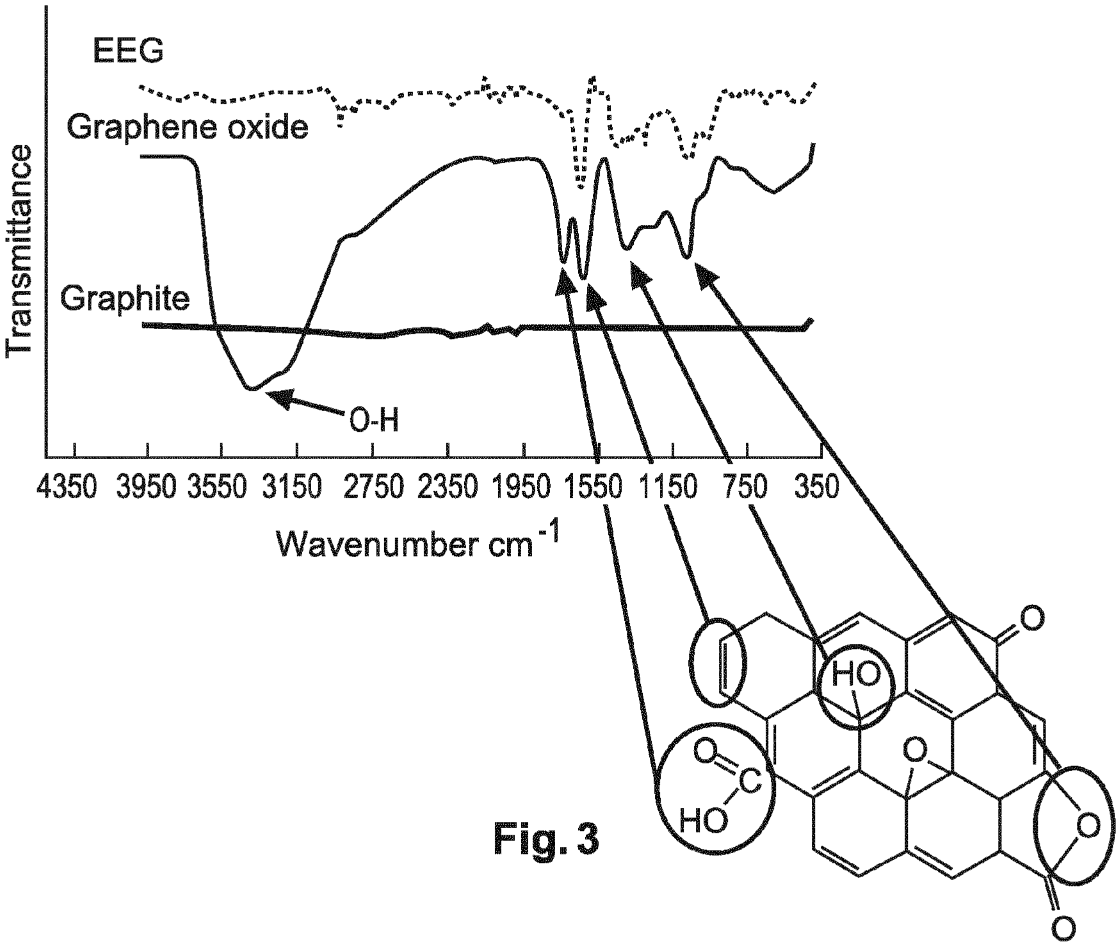
EEG
Graphene oxide
Graphite
Transmittance
O-H
4350 3950 3550 3150 2750 2350 1950 1550 1150 750 350
Wavenumber $cm^{-1}$

Fig. 3

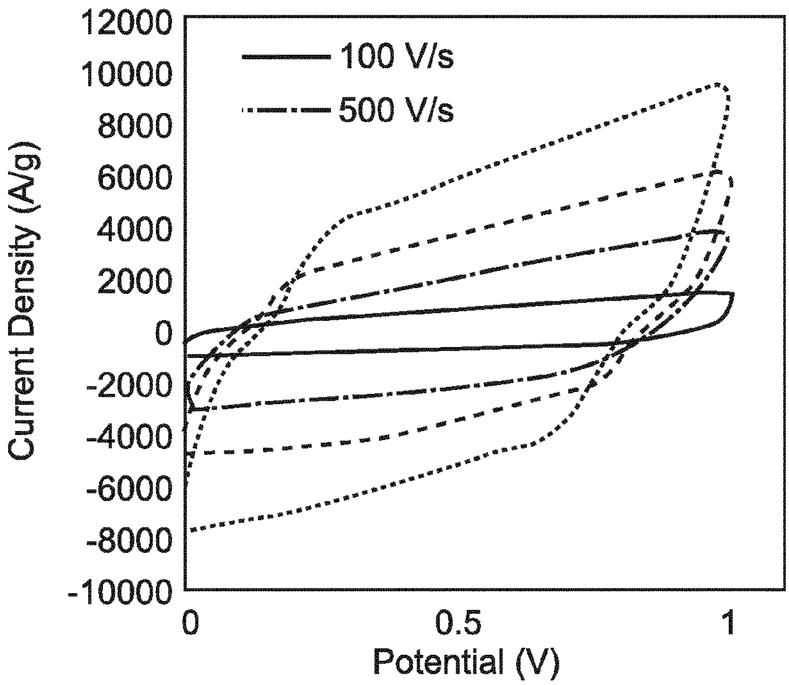
100 V/s
500 V/s
Current Density (A/g)
12000
10000
8000
6000
4000
2000
0
-2000
-4000
-6000
-8000
-10000
0
0.5
1
Potential (V)

Fig. 4

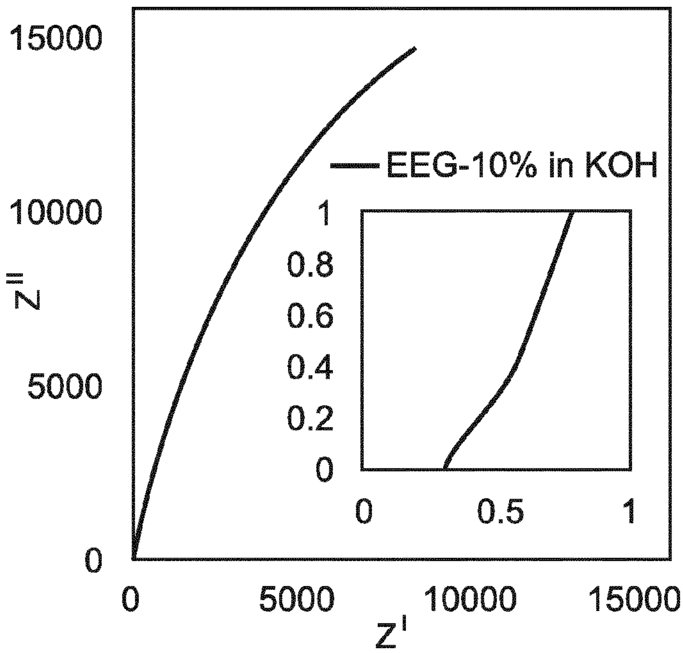
15000
10000
5000
0
Z''
EEG-10% in KOH
1
0.8
0.6
0.4
0.2
0
0
0.5
1
0
5000
10000
15000
Z'

Fig. 5

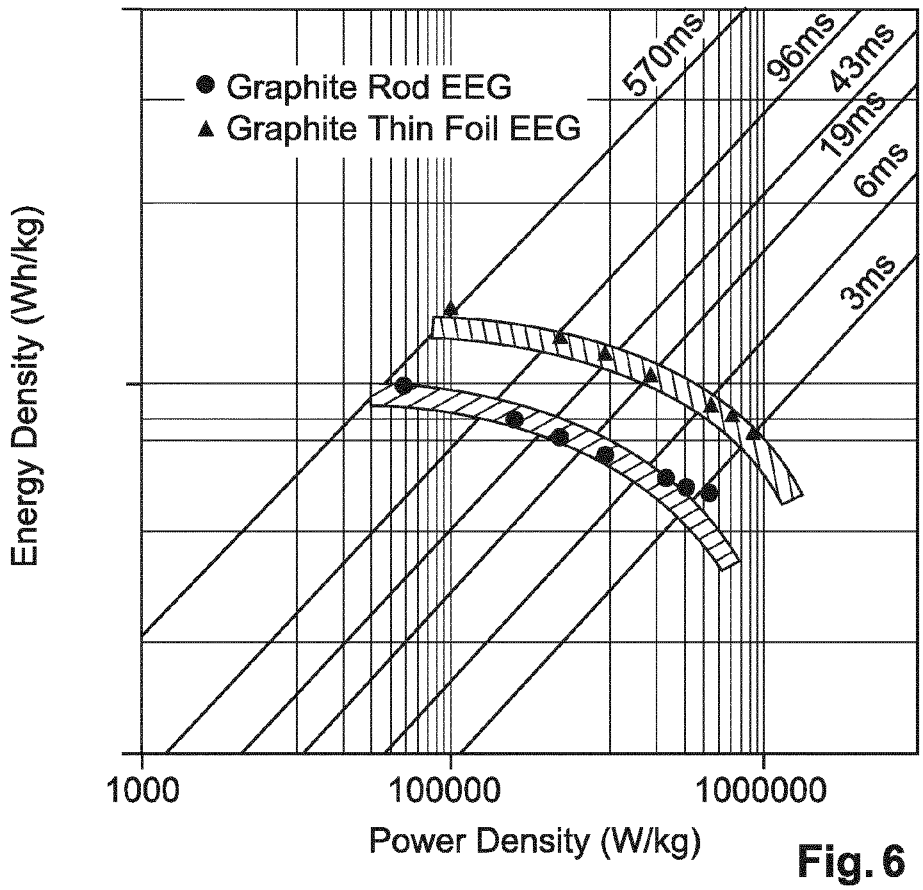
Graphite Rod EEG
Graphite Thin Foil EEG
570ms
96ms
43ms
19ms
6ms
3ms
Energy Density (Wh/kg)
1000
100000
1000000
Power Density (W/kg)

Fig. 6

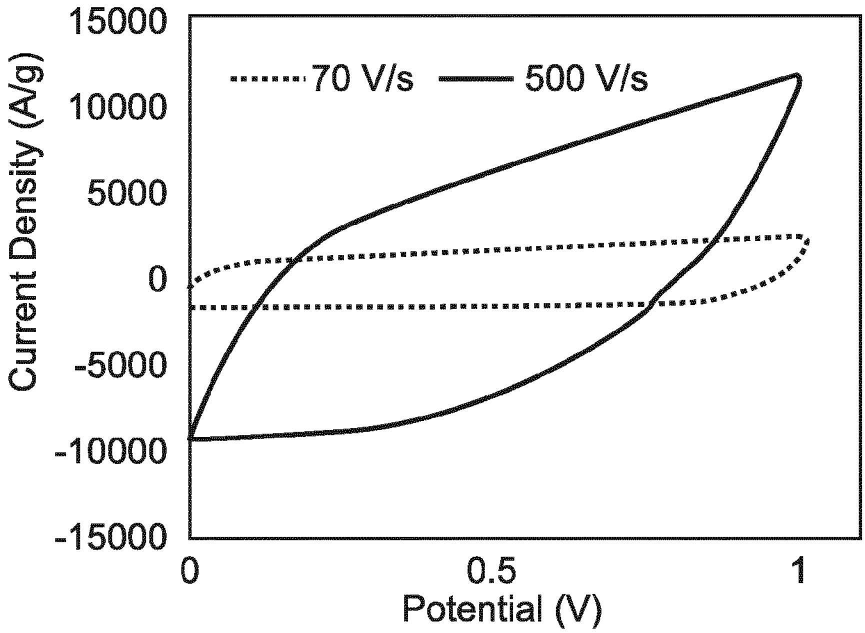
70 V/s
500 V/s
15000
10000
5000
0
-5000
-10000
-15000
Current Density (A/g)
0
0.5
1
Potential (V)

**Fig. 7**

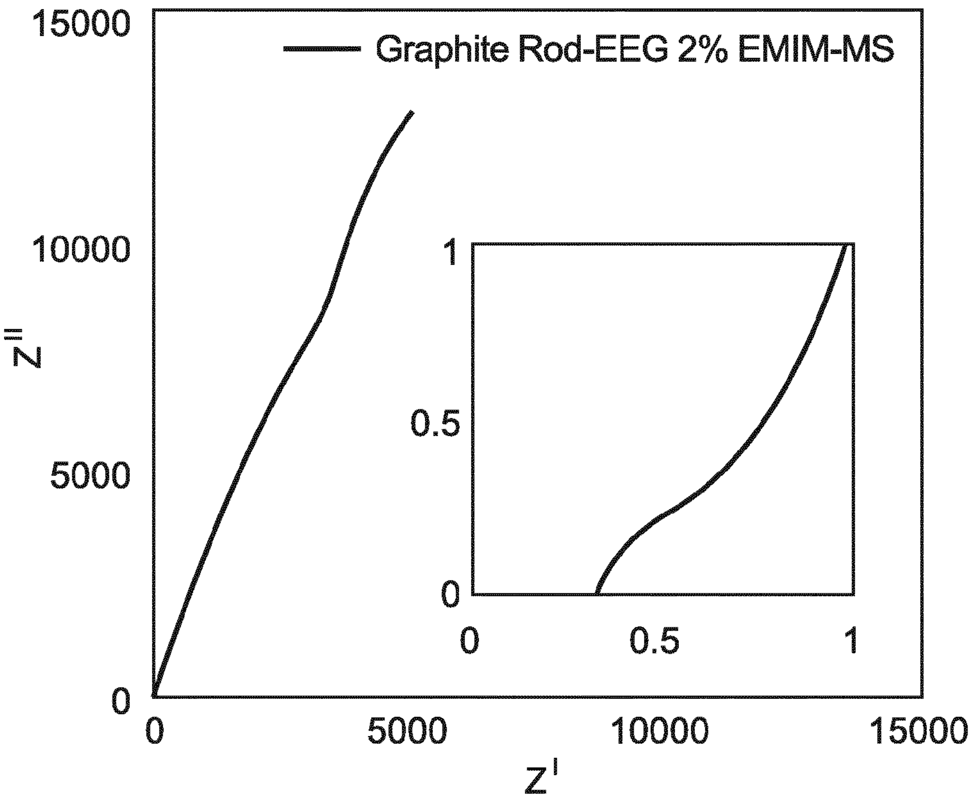
Graphite Rod-EEG 2% EMIM-MS
15000
10000
5000
0
Z''
0
5000
10000
15000
Z'
1
0.5
0
0
0.5
1

**Fig. 8**

Europäisches Patentamt
European Patent Office
Office européen des brevets

# EUROPEAN SEARCH REPORT

Application Number
EP 14 16 5215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/061059 A1 (DRYFE ROBERT ANGUS WILLIAM [GB] ET AL) 6 March 2014 (2014-03-06) * figures 6c, 7a-7d * * paragraphs [0004], [0013] - [0015], [0019], [0023], [0028] - [0032], [0043] * | 1-17 | INV. C01B31/04 H01G11/36 H01G11/62 H01G11/86 |
| X | WO 2013/043120 A1 (UNIV SINGAPORE [SG]; LOH KIAN PING [SG]; WANG YU [SG]) 28 March 2013 (2013-03-28) * paragraphs [0046], [0051] - [0053], [0058] - [0059], [0068] * | 1,13,15, 17 | |
| X | US 2009/026086 A1 (ZHAMU ARUNA [US] ET AL) 29 January 2009 (2009-01-29) * paragraphs [0003], [0032], [0042], [0058] * * example 1 * | 1,13,15, 17 | |
| A,D | US 2013/001089 A1 (LI LAIN-JONG [TW] ET AL) 3 January 2013 (2013-01-03) * paragraph [0004] - paragraph [0018] * | 1-17 | TECHNICAL FIELDS SEARCHED (IPC) |
| A | WO 2012/030415 A1 (UNIV TEXAS [US]; RUOFF RODNEY S [US]; ZHU YANWU [US]; STOLLER MERYL [U) 8 March 2012 (2012-03-08) * paragraph [0038] * * paragraphs [0064], [0082] - [0089], [0117] - [0122] * | 15,16 | C01B H01G |

The present search report has been drawn up for all claims

1

| Place of search | Date of completion of the search | Examiner |
|---|---|---|
| Munich | 24 September 2014 | Sedlmaier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 16 5215

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2014

| Patent document cited in search report | Publication date | Patent family member(s) | Publication date |
|---|---|---|---|
| US 2014061059 A1 | 06-03-2014 | CN 103917489 A | 09-07-2014 |
| | | EP 2683652 A1 | 15-01-2014 |
| | | JP 2014513659 A | 05-06-2014 |
| | | KR 20140044795 A | 15-04-2014 |
| | | US 2014061059 A1 | 06-03-2014 |
| | | WO 2012120264 A1 | 13-09-2012 |
| WO 2013043120 A1 | 28-03-2013 | CN 103889896 A | 25-06-2014 |
| | | US 2014231270 A1 | 21-08-2014 |
| | | WO 2013043120 A1 | 28-03-2013 |
| US 2009026086 A1 | 29-01-2009 | NONE | |
| US 2013001089 A1 | 03-01-2013 | NONE | |
| WO 2012030415 A1 | 08-03-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130001089 A


### Non-patent literature cited in the description


- **KOSSYREV et al.** *Journal of Power Sources,* 2012, vol. 201, 347-352
- **MILLER et al.** *Science,* September 2010, vol. 329, 1637-1639
- **KAIXUAN SHENG et al.** *Sci. Rep.,* 2012, vol. 2, 247
- *Adv Funct Mater,* 2008, vol. 18, 1518-1525
- **Z. WU ; K. PARVEZ ; X. FENG ; K. MÜLLEN.** *Nature Communications,* 17 September 2013, vol. 4 (2487